# EUROPÄISCHE PATENTSCHRIFT

(11) **EP 0 823 932 B1**
(45) Veröffentlichungstag und Bekanntmachung des Hinweises auf die Patenterteilung: **19.12.2001**
(21) Anmeldenummer: 96914172.0
(22) Anmeldetag: 02.05.1996
(51) Int. Cl.: C09D 175/04, C08K 5/13, C08K 5/134, C08K 5/3475, B05D 7/00, A63C 5/00

(54) **SCHICHTSTOFF**
LAMINATE
STRATIFIE

(30) Priorität: 03.05.1995 DE 19516149
(43) Veröffentlichungstag der Anmeldung: 18.02.1998
(73) Patentinhaber: Kiriazis, Leonidas, 48151 Münster (DE); Prissok, Frank, 49448 Lenförde (DE)
(72) Erfinder: KIRIAZIS, Leonidas, D-48151 Münster (DE); PRISSOK, Frank, D-49448 Lenförde (DE); DICKERHOF, Karlheinz, D-48317 Drensteinfurt (DE)
(74) Vertreter: Fitzner, Uwe, Dr.
(86) Internationale Anmeldenummer: EP9601833
(87) Internationale Veröffentlichungsnummer: WO9634925

(56) Entgegenhaltungen:
- EP-A- 0 138 227
- EP-A- 0 191 666
- DE-A- 1 469 467
- GB-A- 1 253 108
- GB-A- 1 419 768
- US-A- 3 499 783
- US-A- 4 355 071

## Beschreibung

Gegenstand der vorliegenden Anmeldung ist ein Schichtstoff auf Basis von thermoplastischen Polyurethanen, der sich insbesondere für Herstellung von Skiern, Surfbrettern sowie Möbeln eignet.

Aus der EP-A-287911 sind Schichtstoffe aus fünf oder sechs Komponenten sowie ihre Verwendung zur Herstellung von Skiern, Surfbrettern und Möbelbauteilen bekannt. Im einzelnen bestehen die Schichten aus einer Folie aus hoch transparentem, thermoplastischem Kunststoff, einer bei Raumtemperatur klebfreien Polyurethanschicht, einer Farbschicht, einer Epoxidharzschicht und einem Träger- und Kernmaterial aus Polyurethanhartschaum, Holz oder Aluminium.

Aus der FR-A-2660251 ist ebenfalls ein für Skier verwendbares Mehrschichtsystem bekannt. Unter anderem wird dort ein Dreischichtsystem, bestehend aus Polycarbonat, Polyamid und thermoplastischem Polyurethan beschrieben.

Aus US-A-3 499 783, EP-A-0 138 227, GB-A-1 419 768, GB-A-1 253 108 sind ferner verschiedene Schichtstoffe enthaltend Polyurethane bekannt.

Nachteil des Standes der Technik ist, daß die bisher verwendeten Schichtstoffe nicht ausreichend stabil gegen ultraviolette Strahlung sind. Aus diesem Grunde werden die Schichtstoffe in der Regel mit einer Klarlackschicht versehen, die ein spezielles UV-Absorbersystem enthält.

Aufgabe der vorliegenden Erfindung war es demgemäß, einen Schichtstoff zu entwickeln, der den Einsatz einer Klarlackschicht mit speziellem UV-Absorbersystem überflüssig macht.

Diese Aufgabe wird überraschend durch einen Schichtstoff, enthaltend
a) eine Schicht aus Klarlack auf Basis von Polyurethan, erhältlich aus hydroxylgruppenhaltigen Acrylpolymerisaten und aliphatischen und/oder cycloaliphatischen Polyisocyanaten,
b) ggf. eine Haftvermittlerschicht,
c) eine Schicht auf Basis von thermoplastischen, gegen ultraviolette Strahlung stabilisierten Polyurethanen auf der Basis von Diisocyanaten, Diolen als Kettenverlängerern, Polytetrahydrofuran oder linearen Polyesterdiolen,
d) ggf. eine Haftvermittlerschicht und
e) einer Trägermaterialschicht.

Die genannten thermoplastischen Polyurethane können beispielsweise hergestellt werden nach dem Band- oder dem Extruderverfahren durch Umsetzung von
a) organischen, vorzugsweise aliphatischen, cycloaliphatischen oder insbesondere aromatischen Diisocyanaten,
b) Polyhydroxylverbindungen mit Molekulargewichten von 500 bis 8000 und
c) Kettenverlängerungsmitteln mit Molekulargewichten von 60 bis 400 in Gegenwart von gegebenenfalls
d) Katalysatoren,
e) Hilfsmitteln und/oder Zusatzstoffen.

Die hierfür verwendbaren Ausgangsstoffen (a) bis (c), Katalysatoren (d), Hilfsmittel und Zusatzstoffe (e) werden im folgenden näher beschrieben:
a) Als organische Diisocyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylendiisocyanat-1,6, Methyl-pentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie Isophoron-diisocyanat, 1,4-Cyclohexan-diisocyanat. 1-Methyl-2,4- und -2,6-cyclohexan-diisocyanat sowie die entsprechenden Isomerengemische, 2,4'-, 4,4'- und 2,2'-Dicyclohexylmethan-diisocyanat sowie die entsprechenden Isomerengemische und vorzugsweise aromatische Diisocyanate, wie 2,4-Toluylendiisocyanat, Gemische aus 2,4- und 2,6-Toluylendiisocyanat 4,4'-, 2,4'- und 2,2'-Diphenylmethandiisocyanat, Gemische aus 2,4'- und 4,4'-Diphenylmethan-diisocyanat, urethanmodifiziertes flüssiges 4,4'- und/oder 2,4'- oder 4,4'-Diisocyanatodiphenylethan-(1,2) und 1,5-Naphtylen-diisocyanat. Vorzugsweise verwendet werden Hexamethylen-diisocyanat-1,6, 4.4'-Dicyclohexylmethan-diisocyanat, Isophorondiisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.
b) Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die Polyhydroxylverbindungen müssen zumindest überwiegend linerar, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriumethylat, Natrium- oder Kaliummethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekühl, das 2 reaktive Wasserstoffatome gebunden enthält. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyldialkanolamine, beispielsweise N-Methyldiethanolamin und Diole, z.B. Alkandiole oder Dialkylenglykole mit 2 bis 12 C-Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).
   Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.
   Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.
   Die im wesentlichen linearen Polyetherole besitzen Molekulargewichte von 500 bis 8.000, vorzugsweise 600 bis 6.000 und insbesondere 800 bis 3.500. Sie können sowohl einzeln als auch in Form von Mischungen untereinander zur Anwendung kommen.
   Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden.
   Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimenthylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von α-Hydroxycarbonsäuren, beispielsweise α-Hydroxycapronsäure und vorzugsweise Polymerisationsprodukte von Lactonen, beispielsweise gegebenenfalls substituierten ε-Caprolactonen.
   Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.
   Die Polyesterole besitzen Molekulargewichte (Gewichtsmittel) von 500 bis 6.000, vorzugsweise 800 bis 3.500.
c) Als Kettenverlängerungsmittel (c) mit Molekulargewichten von 60 bis 400, vorzugsweise 60 bis 300, kommen vorzugsweise Alkandiole mit 2 bis 12 Kohlenstoffatomen, vorzugsweise mit 2, 4 oder 6 Kohlenstoffatomen, wie z.B. Ethandiol, Hexandiol-1,6, und insbesondere Butandiol-1,4 und Dialkylenether-glykole, wie z.B. Diethylenglykohl und Dipropylenglykol in Betracht. Geeignet sind jedoch auch Diester der Terephthalsäure mit Alkandiolen mit 2 bis 4 Kohlenstoffatomen, wie z.B. Terephtalsäure-bis-ethandiol oder -butandiol-1,4, Hydroxyalkylenether des Hydrochinons, wie z.B. 1,4-Di-(ß-hydroxyethyl)-hydrochinon, (cyclo)aliphatische Diamine, wie z.B. 4,4'-Diaminodicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethylethylendiamin und aromatische Diamine, wie z.B. 2,4- und -2,6-Toluylen-diamin, 3,5-Diethyl-2,4- und 2,6-toluylen-diamin und primäre, ortho- di-, -tri- und/oder -tetraalkylsubstituierte 4,4'-Diamino-diphenylmethane.
   Als Kettenverlängerungsmittel finden vorzugsweise Verwendung Alkandiole mit 2 bis 6 C-Atomen im Alkylenrest, insbesondere Butandiol-1,4 und/oder Dialkylenglykole mit 4 bis 8 Kohlenstoffatomen.
   Zur Einstellung von Härte- und Schmelzpunkt der thermoplastischen Polyurethane können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Härte und der Schmelzpunkt der thermoplastische Polyurethane mit zunehmendem Gehalt an Diolen ansteigt.
   Zur Herstellung der thermoplastischen Polyurethane werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1 : 0,85 bis 1,20, vorzugsweise 1 : 0,95 bis 1 : 1,05 und insbesondere 1 : 0,98 bis 1,02 beträgt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutzylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe, Verstärkungsmittel und Weichmacher.
   Nähere Angaben über die oben genannten Hilfsmittel- und Zusatzstoffe sind der Fachliteratur, beispielsweise der Monographie von J.H.Saunders und K.C. Frisch "High Polymers", Band XVI, Polyurethane, Teil 1 und 2, Verlag Interscience Publishers 1962 bzw. 1996, dem Kunststoff-Handbuch, Band XII, Polyurethane oder der DE-OS 29 01 774 zu entnehmen.
   Wie bereits dargelegt wurde, kann das thermoplastische Polyurethan vorzugsweise nach dem Bandverfahren hergestellt werden. Im einzelnen wird beim Bandverfahren auf folgende Weise verfahren:
   Die Aufbaukomponenten (a) bis (c) und gegebenenfalls (d) und/oder (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise Förderband, aufgebracht und durch eine temperierte Zone geführt. Die Reaktionstemperatur in der temperierten Zone beträgt 60 bis 200° C, vorzugsweise 100 bis 180° C und die Verweilzeit 0,05 bis 0,5 Stunden, vorzugsweise 0,1 bis 0,3 Stunden. Nach beendeter Reaktion läßt man das thermoplastische Polyurethan abkühlen und zerkleinert oder granuliert es anschließend.
   Beim Extruderverfahren werden die Aufbaukomponenten (a) bis (c) und gegebenenfalls (d) und (e) einzeln oder als Gemisch in den Extruder eingeführt, bei Temperaturen von 100 bis 250° C, vorzugsweise 140 bis 220° C zur Reaktion gebracht, das erhaltene thermoplastische Polyurethan wird extrudiert, abgekühlt und granuliert.
   Die erhaltenen Granulate können zwischengelagert oder direkt mit Polyolefin-homo- und/oder - copolymeren mattiert werden.
   Vorzugsweise Anwendung finden thermoplastische Polyurethane mit einer Shore A-Härte von 70 bis 98, vorzugsweise von 75 bis 90, die hergestellt werden durch Umsetzung von Polyoxytetramethylenglykol oder insbesondere Alkandiol-polyadipaten mit 2 bis 6 C-Atomen im Alkylenrest, linearen aliphatischen und/oder cycloaliphatischen Diisocyanaten, z.B. Hexamethylen-diisocyanat-1,6 oder 4,4-Dicyclohexylmethan-diisocyanat, und vorzugsweise aromatischen Diisocyanaten und/oder insbesondere 4,4'-Diphenylmethandiisocyanat und Butandiol-1,4 im Äquivalenzverhältnis von NCO- : OH-Gruppen von 1 : 0,95 bis 1,05.

Das thermoplastische Polyurethan ist erfindungsgemäß zur Stabilisierung gegen ultraviolette Strahlung mit Antioxidanzien, vorzugsweise sterisch gehinderten Phenolen versetzt. Um den Schutz gegen ultraviolette Strahlung noch zu verbessern, können spezielle UV-Filtersubstanzen in das thermoplastische Polyurethan eingemischt werden. Vorzugsweise werden hierfür Benztriazole verwendet.

Ferner können die thermoplastischen Urethane mit als Radikalfänger wirkenden Substanzen vermischt sein. Hierfür kommen insbesondere sterisch gehinderte Amine oder Epoxidverbindungen in Betracht.

Die Härte des erfindungsgemäß eingesetzten thermoplastischen Polyurethans hängt von dem Anwendungsbereich ab. Grundsätzlich liegt die Shore-A-Härte zwischen 75 A und 85 D. Für den Bereich der Beschichtung von Skiern und Surfbrettern kommen insbesondere 45 bis 80 D in Betracht. Bei Holzbeschichtungen, insbesondere für im Innenbereich verwendete Holzteile und Möbel sind es 85 A bis 45 D.

In einer erfindungsgemäß bevorzugten Form wird der beschriebene Schichtstoff auf einen Träger aufgetragen. Hierbei handelt es sich vorzugsweise um Trägermaterialien aus glasfaserverstärktem Kunststoff, z.B. Polyesterharzen, aus Polyurethanhartschäumen, Holz oder Metall. Überschichtet ist das thermoplastische Polyurethan vorteilhafterweise mit einem Klarlack.

Durch die Verwendung der gegen UV-Strahlung stabilisierten Polyurethane wird der zusätzliche Schutz durch ein spezielles UV-Absorbersystem in der Klarlackschicht nicht mehr benötigt. Dies macht es möglich, nunmehr als oberste Deckschicht, hartes, hochglänzendes sehr kälteflexibles und schnittfestes Material einzusetzen. Hier sind besonders Klarlacke auf der Basis von Isocyanaten zu nennen, die eine hervorragende Haftung auf der Polyurethanoberfläche zeigen. Wahrscheinlich ist dies auf eine Ankopplung an endständigen Alkoholgruppen des Polyurethans zurückzuführen, die infolge des speziellen erfindungsgemäß verwendeten Schichtstoffes nunmehr in ausreichendem Maße zur Verfügung stehen. Weiterhin ist durch die Stabilisierung gegen UV-Strahlung auch die Verwendung von coextrudierten Materialien (besonders Polyethylen- und Polybutylenterephthalat) möglich, die sehr gute mechanische Eigenschaften haben und einen ggf. nötigen Tiefziehprozeß positiv beeinflussen.

Für die Beschichtung des thermoplastischen Polyurethans mit Klarlack werden erfindungsgemäß vorzugsweise Überzugsmassen verwendet, die als Bindemittel hydroxylgruppenhaltige Acrylpolymerisate und aliphatische und/oder cycloaliphatische Polyisocyanate enthalten. Zusätzlich enthalten die Überzugsmassen Lösemittel. Ggf. können auch Verlaufshilfsmittel, UV-Absorber und Radikalfänger zum Einsatz kommen.

Erfindungsgemäß handelt es sich vorzugsweise um Zweikomponenten-Polyurethan-Beschichtungsmittel. Diese enthalten
a) eine oder mehrere Polyisocyanatkomponenten, vorzugsweise zwei verschiedenen Polyisocyanaten,
b) eine oder mehrere Polyhydroxylverbindungen mit Hydroxylgruppengehalten von 0,1 bis 10 Gew.-% (= OH/Zahl von 3,3 bis 330), vorzugsweise 1 bis 6 Gew.-% (= OH/Zahl von 33 bis 198), und ggf.
c) reaktive Verdünnungsmittel, d.h. niedermolekulare Polyolkomponenten mit mindestens zwei gegenüber Isocyanat reaktiven Gruppen und Hydroxylgruppengehalten von mehr als 10 Gew.-%.

Zum Einsatz kommen können aber auch Einkomponenten-Polyurethan-Beschichtungsmittel, also Bindemittel, bei denen es sich um Isocyanat-Präpolymere mit einem NCO-Gehalt von ca. 2 bis 16 Gew.-% handelt und die beispielsweise durch Umsetzung von Di- und/oder Polyisocyanaten mit unterschüssigen Mengen an Polyhydroxylverbindungen erhalten werden.

Die in den erfindungsgemäßen Bindemittelgemischen vorliegende Komponente a) besteht aus mindestens einem organischen Polyisocyanat einer über 2, vorzugsweise bei 2,6 bis 6, liegenden mittleren NCO-Funktionalität. Es handelt sich um die an sich bekannten Lackpolyisocyanate auf Basis von einfachen Diisocyanaten des Molekulargewichtsbereichs 168 bis 300. Diese Lackpolyisocyanate stellen Uretdion-, Biuret-, Urethan- und/oder Isocyanuratgruppen aufweisende Modifizierungsprodukte der einfachen Diisocyanate dar, wobei im allgemeinen nach der Modifizierungsreaktion überschüssige Mengen an Ausgangsdiisocyanaten, insbesondere durch Dünnschichtdestillation, so weit entfernt werden, daß in den Lackpolyisocyanaten höchstens 0,7, vorzugsweise höchstens 0,5 Gew.-%, an überschüssigem Ausgangsdiisocyanat vorliegt. Die als Komponente a) in den erfindungsgemäßen Bindemittelgemischen vorliegenden Lackpolyisocyanate weisen im allgemeinen einen NCO-Gehalt von 8 bis 40, vorzugsweise 10 bis 32 Gew.-% auf.

Zur Herstellung der Lackpolyisocyanate geeignete Diisocyanate sind beispielsweise 2,4-Diisocyanatotoluol, seine technischen Gemische mit 2,6-Diisocyanatotoluol, 4,4'-Diisocyanatodiphenylmethan, seine technischen Gemische mit den 2,4'- und gegebenenfalls 2,2'-Isomeren, sowie gegebenenfalls mit seinen höheren Homologen, wie sie durch Phosgenierung von Anilin/Formaldehyd-Kondensaten erhalten werden, 4,4'-Diisocyanatodicyclohexylmethan und dessen Gemische mit 2,4'-Diisocyanatodicyclohexylmethan, 1,6-Diisocyanatohexan (HDI), 1-Isocyanato-3,3,5-trimethyl-5-isocyanatomethyl-cyclohexan (IPDI) oder Gemische dieser Diisocyanate.

Die Herstellung der Lackpolyisocyanate aus den beispielhaft genannten Ausgangsdiisocyanaten erfolgt nach bekannten Methoden des Standes der Technik. So kann beispielsweise die Herstellung der Biuretgruppen aufweisenden Lackpolyisocyanate nach dem Verfahren der US-Patentschriften 3 124 605, 3 358 010, 3 903 126, 3 903 127 oder 3 976 622 erfolgen. Die Herstellung von erfindungsgemäß einsetzbaren Urethanpolyisocyanaten geschieht beispielsweise gemäß US-PS 3 183 112, während die Herstellung von Isocyanuratgruppen aufweisenden, erfindungsgemäß geeigneten Lackpolyisocyanaten, beispielsweise nach den Verfahren der GB-PSen 1 060 430, 1 234 972, 1 506 373 oder 1 458 564 bzw. gemäß US-PS 3 394 111, US-PS 3 645 979 oder US-PS 3 919 218 erfolgt. Bei der Herstellung der Isocyanatgruppen aufweisenden Lackpolyisocyanate gemäß den letztgenannten Veröffentlichungen entstehen oftmals gleichzeitig Uretdiongruppen aufweisende Dimerisierungsprodukte, die im Gemisch mit den Isocyanuratgruppen aufweisenden Polyisocyanaten als Lackpolyisocyanate erfindungsgemäß verwendbar sind.

Besonders bevorzugt werden beim erfindungsgemäßen Verfahren als Härterkomponente a) Uretdion-, Biuret-, Urethan- und/oder Isocyanuratgruppen aufweisende Modifizierungsprodukte auf Basis von (cyclo)aliphatischen Diisocyanaten eingesetzt. Besonders bevorzugt sind Biuretgruppen aufgweisende Polyisocyanate auf Basis von HDI, sowie gegebenenfalls Uretdiongruppen aufweisende Polyisocyanate auf Basis von HDI und/oder IPDI.

Als Komponente b) finden vorzugsweise Polyacrylate Verwendung. Diese weisen gelpermeationschromatographisch unter Verwendung von Polystyrol als Standard bestimmbare Molekulargewichte Mn innerhalb des Bereichs von 1.000 bis 100.000, vorzugsweise 1.000 bis 30.000, auf.

Erfindungsgemäß bevorzugt wird, eine Zusammensetzung aus folgenden Bestandteilen:
A) 50 bis 90 Gew.-%, bezogen auf die Summe der Acrylpolymerisate eines ersten Acrylpolymerisats, mit
   - einem Molekulargewicht von 800 bis 4000.
   - einer Hydroxylzahl von 80 bis 180 und
   - einer Glasübergangstemperatur unterhalb - 10°C, das hergestellt worden ist aus
      a₁) 75 bis 100 Gew.-% Acrylsäureestern,
      a₂) 0 bis 25 Gew.-% Methacrylsäureester, wobei ein solcher Anteil der Komponenten a₁ und a₂ Hydroxyalkylacrylate bzw. Hydroxyalkylmethacrylate sind, daß die Hydroxylzahl von 80 bis 180 erreicht wird,
      a₃) 0 bis 15 Gew.-% Comonomeren mit aromatischen Gruppen und
      a₄) 0 bis 2 Gew.-% α, β-ethylenisch ungesättigten Säuren, wobei die Summe der Komponenten a₁ bis a₄ 100 % beträgt,
B) 10 bis 50 Gew.-%, bezogen auf die Summe der Acrylpolymerisate, eines zweiten Acrylpolymerisats mit
   - einem Molekulargewicht von 3.000 bis 10.000,
   - einer Hydroxylzahl von 40 bis 120 und
   - einer Glasübergangstemperatur von -10° bis + 70°, das hergestellt worden ist, aus
      b₁) 0 bis 30 Gew.-% Acrylsäureestern,
      b₂) 70 bis 90 Gew.-% Methacrylsäureestern, wobei ein solcher Anteil der Komponenten b₁ und b₂ Hydroxyalkylacrylate bzw. Hydroxyalkylmethacrylate sind, daß die Hydroxylzahl von 40 bis 120 erreicht wird,
      b₃) 0 bis 30 Gew.-% Comonomeren mit aromatischen Gruppen und
      b₄) 0 bis 3 Gew.-% α, β-ethylenisch ungesättigten Säuren, wobei die Summe der Komponenten b₁ und b₄ 100 % beträgt, und
C) ein aliphatisches oder cycloaliphatisches Polyisocyanat oder ein Gemisch derartiger Polyisocyanate in einer solchen Menge, daß auf eine Hydroxylgruppe der Bestandteile A) und B) 0,8 bis 1,3 Isocyanatgruppen entfallen.
   Das Polymerisat A wird durch radikalische Lösungspolymerisation der Monomeren a₁ bis a₄ hergestellt. Als Komponente a₁ können Methyl-, Ethyl-, n-Propyl-, i-Propyl-, n-Butyl-, i-Butyl-, sec-Butyl-, t-Butyl-, n-Pentyl-, Neopentyl-, n-Hexyl-, Cyclohexyl-, n-Octyl-, 2-Ethylhexyl-, n-Dodecyl- (Lauryl-), 2-Hydroxyethyl-, 4-Hydroxybutylacrylat und Hydroxypropylacrylat eingesetzt werden. Als Komponente a₂ sind die entsprechenden Ester der Methacrylsäure geeignet.
   Es können auch bis zu 15 Gew.-%, bezogen auf die Summe aller Comonomeren, Monomere mit aromatischen Gruppen eingesetzt werden. Hier sind z.B. Styrol, Methylstyrol oder Vinyltoluol geeignet (Komponente a₃).
   Als Komponenten a₄ können Acrylsäure und/oder Methacrylsäure bis zu einem Anteil von 2 Gew.-% mitverwendet werden. Die Polymerisation wird so durchgeführt, daß das entstehende Polymerisat A ein Molekulargewicht, gemessen durch Gelpermeationschromatographie, von 800 bis 4.000 aufweist. Die Einstellung dieses Molekulargewichts kann durch geeignete Steuerung der Verfahrensparameter wie Temperatur, Menge und Art des Initiators, Konzentration und Zeit erreicht werden.
   Die erfindungsgemäße Überzugsmasse enthält neben den genannten Bindemittelbestandteilen organische Lösungsmittel, z.B. Xylol, Toluol, andere Alkylbenzole, Ethylacetat, Butylacetat, Ethylglykolacetat und/oder Ketone. Weiterhin kann die Überzugsmasse Verlaufshilfsmittel, z.B. Silikonöle und UV-Absorber und Radikalfänger, z.B. sterisch gehinderte tertiäre Amine, Benzinphenol und Oxanilide, enthalten.
   Die Herstellung der Polyacrylatkomponente b) erfolgt vorzugsweise in einem mehrstufigen, vorzugsweise zweistufigen Verfahren in einem Reaktionsgefäß. In den einzelnen Stufen wird nach dem allgemein bekannten Zulaufverfahren polymerisiert. Verfährt man in zwei Verfahrensstufen,erhält man Polymerisate mit bimodaler Molekulargewichtsverteilung. Die Einstellung der mittleren Molekulargewichte der in den einzelnen Stufen synthetisierten Copolymerisate kann durch die gewählte Polymerisationstemperatur, Initiator, Monomerenkonzentration und durch Substanzen eingestellt werden, die als Radikalübertragungsmittel dienen. Bevorzugt wird nur die Polymerisationstemperatur und/oder die Initiator/Monomerenkonzentration variiert, wobei ganz besonders bevorzugt beide Größen gleichzeitig geändert werden.
   In der ersten Stufe wird hierbei eine Comonomerenmischung und eine Initiatormischung zu einem organischen Lösemittel zudosiert. Es wird bei niedriger Temperatur und/oder niedriger Initiatorkonzentration eine Comonomerenmischung mit geringer Konzentration an ungesättigten hydroxifunktionellen Monomeren polymerisiert. Der Hydroxylgruppengehalt bezogen auf das Festharz beträgt 0,1 bis 4, vorzugsweise 0,3 bis 2 Gew.-%, wobei jedoch weniger als 50 Gew.-% Hydroxylgruppen tragende Monomere, bezogen auf die Gesamtmenge der eingesetzten Monomeren, eingesetzt werden, vorzugsweise weniger als 30 %. Hierbei entsteht der hochmolekulare Anteil des Gemischs.
   In einer zweiten Stufe wird in die bereits polymerisierte Polymer/Lösungsmittelmischung eine zweite in der Konzentration und/oder Zusammensetzung unterschiedliche Comonomerenzubereitung einpolymerisiert, wobei die Temperatur und/oder Initiatorkonzentration höher liegen muß als in der ersten Verfahrensstufe.
   Hierbei wird eine höhere Konzentration an hydroxyfunktionellen Acrylatmonomeren eingesetzt. Der Hydroxylgruppengehalt, bezogen auf das Festharz, beträgt 0,5 bis 8 Gew.-%, vorzugsaeise 1 bis 5 Gew.-%. Dies ergibt den niedermolekularen Anteil des Gemischs.
   Selbstverständlich können die oben beschriebenen Verfahrensstufen auch in umgekehrter Weise durchlaufen werden.
   Nach erfolgter Copolymerisationsreaktion können gegebenenfalls noch verbleibende Spuren leicht flüchtiger Monomerer durch "Andestillieren" des Copolymerisationsansatzes entfernt werden.
   Im allgemeinen liegt die Polymerisationstemperatur innerhalb des Bereichs von 40 bis 190°C, wobei die Eigenschaften der Copolymerisate, insbesondere deren Molekulargewicht, wie bereits angedeutet, durch geeignete Wahl der Reaktionstemperatur und der Initiierungsrate des Initiators eingestellt werden. Die Halbwertszeit der eingesetzten Initiatoren sollte nicht unter einer Sekunde und nicht über einer Stunde liegen. Vorzugsweise werden Art der Initiatoren und Reaktionstemperatur so gewählt, daß die Halbwertszeit bei 1 bis 20 Min. liegt. Die Herstellung des hochmolekularen Anteils erfolgt vorzugsweise bei gleicher bis niedrigerer Temperatur im Vergleich zur Herstellung des niedermolekularen Anteils.
   Die Konzentration an Initiator bzw. Initiatorgemisch kann für beide Verfahrensstufen gleich oder unterschiedlich sein. Bevorzugt wird bei der Herstellung des Copolymerisats mit durchschnittlich höherem Molekulargewicht weniger Initiator, besonders bevorzugt weniger als die Hälfte der Menge verwendet, als für den Aufbau des Copolymerisats mit durchschnittlich niedrigerem Molekulargewicht.
   Zur Regelung des Molekulargewichts können zusätzlich Hilfsmittel eingesetzt werden, die als Übertragungsmittel dienen, wie beispielsweise Mercaptanverbindungen.
   Zur Initiierung der radikalischen Polymerisation können Peroxidverbindungen, wie z.B. symmetrische Diacylperoxide, wie z.B. Acetyl-, Propionyl-, Butyrylperoxid, sowie Laurylperoxid, symmetrische Peroxidicarbonate, wie z.B. Diethyl-, Diisopropyl, Dicyclohexyl- sowie Dibenzylperoxidicarbonat, Dibenzoylperoxid und Brom-, Nitro-, Methyl- oder Methoxygruppen-substituierte Benzoylperoxide, Dicumylperoxid, Cumolhydroperoxid, Di-tert.-butylperoxid, tert.-Butylperoxy-2-ethyl-hexanoat, tert.-Butylperpivalat, tert.-Butylperoctoat, tert.-Butylphenylperacetat, tert.-Butyl-N-(phenylperoxy)carbonat, tert.-Butyl-N.(2,3- oder 4-chlor-phenyl-peroxy)carbonat, tert.-Butylhydroperoxid, 2,2-Di-tert.-butylperoxybutan, tert.-Amylperbenzoat, 1,3-Bis-(tert.-amylperoxy)-propan und Ethyl-3,3-di-(tert.-amylperoxy)butyrat, Butanonperoxid; aliphatische Azoverbindungen, wie beispielsweise Azobisisobutyronitril und Azobiscyclohexannitril, Azo-bis-2-methylvaleronitril, 2,2'-Azo-bis-isobuttersäurealkylester oder thermolabile hochsubstituierte Ethanderivate, beispielsweise auf Basis Benzpinakol und auf Basis silylsubstituierter Ethanderivate, aber auch energiereiche Strahlung verwendet werden.
   Als Monomere zur Herstellung der Copolymerisate b) kommen insbesondere
   1. alkoholische Hydroxylgruppen aufweisende Monomere,
   2. gegebenenfalls Anhydridgruppen aufweisende Monomere ohne aktive Wasserstoffatome und gegebenenfalls
   3. weitere funktionelle Monomere
   in Betracht.
   Geeignete Monomere der Gruppe 1 sind insbesondere Hydroxyalkylester, α, β-ungesättigter Carbonsäuren, insbesondere von Acrylsäure oder Methacrylsäure mit 2 bis 12, vorzugsweise 2 bis 6, Kohlenstoffatomen im Hydroxyalkylrest. Beispielhaft genannt seien 2-Hydroxyethylacrylat, 2-Hydroxypropylacrylat, 1-Hydroxymethylethylacrylat, 2-, 3- und 4-Hydroxybutylacrylat, die isomeren Hydroxypentylacrylate, die isomeren Hydroxyhexylacrylate und die diesen Acrylaten entsprechenden Methacrylate. Die Hydroxylgruppen aufweisenden Hydroxyalkylester können sowohl primäre als auch sekundäre Hydroxylgruppen aufweisen. Grundsätzlich möglich ist auch eine Variante, derzufolge die beispielhaft genannten Hydroxylgruppen aufweisenden Monomeren ganz oder teilweise durch Modifizierungsprodukte ersetzt werden, die dadurch erhalten werden, daß die beispielhaft genannten Hydroxyalkyl(meth)acrylate einer Modifizierungsreaktion unterzogen werden. Geeignete derartige Modifizierungsreaktionen sind beispielsweise die Anlagerung von cyclischen Estern wie beispielsweise ε-Caprolacton unter ringöffnender Esterbildung oder die Anlagerung von Epoxiden wie beispielsweise Ethylenoxid, Propylenoxid oder Butylenoxid oder 2-Ethylhexylglycidylether im Sinne einer ringöffnenden Etherbildung. Anstelle der Anlagerung von Epoxiden an Hydroxyalkylester der genannten Art können selbstverständlich bei deren Herstellung durch Alkoxylierung von Acrylsäure bzw. Methacrylsäure auch entsprechend höhere Mengen an Alkylenoxiden (mehr als 1 Mol Alkylenoxid pro Mol Säure) zum Einsatz gelangen, so daß unmittelbar Hydroxyl- und Ethergruppen aufweisende Ester der genannten Säuren entstehen, die dann als Monomere der Gruppe 1 zum Einsatz gelangen können. Die Verwendung von derartigen Ethergruppen oder auch zusätzliche Estergruppen aufweisenden Monomeren ist allerdings keineswegs bevorzugt. Auch die Modifizierung der unter Verwendung von unmodifizierten Hydroxylalkyl(meth)acrylaten hergestellten Copolymerisate im Sinne derartiger Anlagerungsreaktionen im Anschluß an die Herstellung der Copolymerisate ist denkbar und würde eine äquivalente Arbeitsweise zu der Verwendung von modifizierten Monomeren darstellen.
   Monomere der Gruppe 2 sind insbesondere einfach olefinisch ungesättigte Verbindungen des Molekulargewichtsbereichs 53 bis 400, vorzugsweise 80 bis 220. Hierzu gehören beispielsweise Acrylsäure- oder Methacrylsäure-alkylester oder - cycloalkylester mit 1 bis 18, vorzugsweise 1 bis 6, Kohlenstoffatomen im Alkyl- bzw. Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder Octadecylester der genannten Säuren, die 3,4,5-Trimethylcyclohexyl-, Isobornyl- oder Cyclohexylester der genannten Säuren, Acrylnitril, Vinylether, Methacrylnitril, Vinylacetat, Vinylchlorid, Styrol, Vinyltoluol oder auch anhydridfunktionelle ungesättige Monomere wie Itaconsäureanhydrid oder Maleinsäureanhydrid oder beliebige Gemische derartiger Monomere.
   Zu den gegebenenfalls mitzuverwendenden Monomeren der Gruppe 3, die im allgemeinen in Mengen von bis zu 5,0, vorzugsweise von 0.1 bis zu 3,0 Gew.-%, bezogen auf das Gesamtgewicht aller Monomeren mitverwendet werden, gehören beispielsweise carboxylgruppenhaltige ungesättigte Monomere wie beispielsweise Acrylsäure, Methacrylsäure, Itaconsäure, Crotonsäure und Halbester der Malein- und Fumarsäure sowie deren Mischungen, epoxidfunktionelle ungesättigte Monomere wie Glycidylmethacrylat, Glycidylacrylat oder Umsetzungsprodukte von (i) Säuren wie Acrylsäure, Methacrylsäure, Maleinsäure, Fumarsäure, Itaconsäure oder Crotonsäure mit (ii) Polyepoxiden wie beispielsweise Bisphenol-A-diglycidether.
   Das als Polymerisationsmedium dienende Lösungsmittel kann beispielsweise ausgewählt sein aus der Gruppe bestehend aus Toluol, Xylol, Chlorbenzol, Butylacetat, Ethylacetat, Ethylglykolacetat, Pentylacetat, Hexylacetat, Methoxypropylacetat, Tetrahydrofuran, Dioxan, Aceton, Methylethylketon, höher substituierten Aromaten, wie z.B. Solvent Naphta^{R}, Schwerbenzol, verschiedene Solvesso^{R}-Typen, verschiedene Shellsol^{R}-Typen und Deasol^{R} sowie höhersiedenden aliphatischen und cycloaliphatischen Kohlenwasserstoffe, wie z.B. verschiedenen Testbenzinen, Mineralterpentilöl, Isopar^{R}-Typen, Nappar^{R}-Typen, Tetralin und Dekalin sowie Gemischen derartiger Lösungsmittel.
   Als Lösungsmittel können in untergeordnetem Maße Reaktivverdünner und niedrigviskose Polyole mitverwendet werden, die mit den Vernetzermolekülen reagieren können.
   Die erfindungsgemäßen Beschichtungsmittelgemische können neben den wesentlichen Komponenten a) und b) gegebenenfalls auch noch c) reaktive Verdünner in einer Menge von bis zu 5 Gew.-%., bezogen auf das Gewicht der Komponente b), enthalten. Reaktive Verdünner sind insbesondere mehrwertige Alkohole des Molekulargewichtsbereichs 62 bis 200 wie beispielsweise Ethylenglykol, Propylenglykol, 1,4-Butandiol, 2-Ethyl-1,3-hexandiol, 1,6-Hexandiol oder beliebige Gemische derartiger mehrwertiger Alkohole. Diese reaktiven Verdünner können der Komponente b) nach ihrer Herstellung oder bereits während ihrer Herstellung als Teil des Lösungsmittels einverleibt werden.
   Außerdem können die Bindemittelgemische auch weitere Hilfs- und Zusatzmittel, insbesondere Lösungsmittel der bei der Herstellung der Komponente b) eingesetzten Art enthalten.
   Die Mengenverhältnisse der reaktiven Komponenten (Isocyanatkomponente a) einerseits und Komponenten b) und gegebenenfalls c) andererseits) werden im übrigen so bemessen, daß das NCO/OH--Äquivalentverhältnis bei 0,2:1 bis 5:1, vorzugsweise 0,7:1 bis 1,3:1, liegt.
   Bei der Herstellung von gebrauchsfertigen Beschichtungsmitteln unter Verwendung der erfindungsgemäßen Bindemittelgemische können diese mit weiteren aus der Polyurethanlacktechnologie üblichen Hilfs- und Zusatzmitteln vermischt werden. Hierzu gehören beispielsweise Verlaufmittel, UV-Absorber, Radikalfänger auf Celluloseesterbasis, Oligoalkylacrylate, Pigmente und Füllstoffe, viskositätskontrollierende Zusätze wie Bentonite und Kieselsäureester, Mattierungsmittel wie beispielsweise Kieselsäure, Aluminiumsilikate und hochmolekulare Wachse oder Katalysatoren für die Isocyanat-Additionsreaktion wie beispielsweise Zinn(II)octoat oder Dimethylbenzylamin.
   Die erfindungsgemäß zum Einsatz gelangenden Beschichtungsmittel zeichnen sich durch ein langes "pot life", sehr schnelle Trocknungszeiten bei Temperaturen von 10 bis 60°C, guten Verlauf sowie Farbtreue bzw. Klarheit und hervorragende mechanische Eigenschaften der mit ihnen erhaltenen Beschichtungen aus.
   Die unter Verwendung der erfindungsgemäßen Bindemittelgemische hergestellten Beschichtungsmittel können nach allen beliebigen Methoden der Lacktechnologie wie z.B. Spritzen, Streichen, Tauchen, Gießen oder Walzen auf beliebige Substrate wie z.B. Metalle, Holz, Mauerwerk, Beton, Glas, Keramik, Kunststoffe, Textilien oder Papier aufgetragen werden. Ein besonders bevorzugtes Substrat ist Polyurethanplatte.
   Einsetzbar sind auch als Polyester Polyethylenterephthalat, Polybutylenterephthalat sowie Polyester auf Basis von Terephthalsäure, Ethylen- und Butylenglykol. Geeignet sind ferner andere Polyester auf Basis von Terephthalsäure, Isophthalsäure und Phthalsäure und verschiedener Polyole wie z.B. Polyethylenglykol und Polytetramethylenglykole unterschiedlichen Polymerisationsgrades.
   Beispiele für geeignete Handelsprodukte sind Hostaphan^{R}, Melinex^{R} und Hostadur^{R}, Ultradur^{R}.
   Als Beispiel für ein geeignetes Handelsprodukt auf Polyurethanbasis sei Elastolan^{R} der Firma BASF AG genannt.
   Die Verbindung der einzelnen Schichten kann mit Hilfe herkömmlicher Haftvermittler erfolgen. Es ist jedoch hervorzuheben, daß die Haftung harter Thermoplaste auf den erfindungsgemäßen thermoplastischen Polyurethanen, insbesondere auf den weichen thermoplastischen Polyurethanen hervorragend ist. Aus diesem Grunde kann erfindungsgemäß mit einer Kombination thermoplastischer Polyurethane niedrigerer und höherer Härte gearbeitet werden. Die weicheren Polyurethane dienen als Haftvermittlerschicht, während die harten Polyurethane eine gute Festigkeit und Verschleißfestigkeit garantieren.
   Die Haftvermittler können sowohl Copolymere, Terpolymere, Pfropfcopolymere und Ionomere sein, mit der Maßgabe, daß sie Carboxyl- oder Anhydridgruppen oder Gruppen, die zu Carboxylgruppen hydrolysierbar sind, aufweisen und daß der Schmelzindex der Polymeren gemessen bei 190°C und einer Belastung von 2,16 kg zwischen 0,1 und 30 g/10 min, bevorzugt zwischen 0,2 und 25 g/10 min und besonders bevorzugt zwischen 0,5 und 20 g/10 min liegt.
   Geeignete Co- bzw. Terpolymere sind herstellbar durch Copolymerisation von Ethylen und α, β-ungesättigten Carbonsäuren wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest wie z.B. Methyl-, Ethyl-, Propyl-, Butyl-, Pentyl-, Hexyl-, Cyclohexyl-, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium, Zink- und Ammoniumsalze. Bevorzugt eingesetzt werden die Carbonsäuren und ihre Anhydride.
   Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.
   Die Mengen der eingesetzten Monomeren werden dabei so gewählt, daß das entsprechende Polymer einen Carboxylgruppengehalt von 0,1 bis 30 Gew.-%, bevorzugt 2 bis 20 Gew.-%, aufweist und daß der Gehalt an Ethyleneinheiten im Polymer bis zu 99,9 Gew.-%, bevorzugt zwischen 75 und 95 Gew.-%, beträgt.
   Geeignete Pfropfcopolymere sind herstellbar durch Pfropfung von mindestnes einem Polymeren aus der Gruppe der Polyolefine mit bis 10 Gew.-%, bevorzugt bis zu 5 Gew.-%, bezogen auf das Gesamtgewicht der Monomeren, mindestens eines Monomeren aus der Gruppe der α, β-ungesättigten Carbonsäuren, deren Anhydride, deren Estern oder Salzen in Gegenwart oder Abwesenheit von Peroxiden. Beispiele von geeigneten Polyolefinen sind die bereits bei der Beschreibung der Deckschichten dieser Beschreibung aufgeführten Polyolefine. Beispiele für geeignete Carbonylverbindungen sind die oben bei der Beschreibung der Haftvermittler auf Copolymerbasis aufgeführten Carbonylverbindungen.
   Die als Haftvermittlerschicht eingesetzten Ionomeren sind herstellbar durch die bereits oben beschriebene Copolymerisation von Ethylen und ggf. weiteren Monomeren mit Salzen α, β-ungesättigten Carbonsäuren oder durch partielle Neutralisation von den bereits oben beschriebenen carbonsäurehaltigen Co-, Ter- und Pfropfpolymeren mit Salzen, Oxiden und Hydroxiden von Natrium, Kalium, Lithium, Magnesium, Calcium, Zink und Ammonium. Die Neutralisation kann in der Schmelze oder in der Lösung durchgeführt werden. Die Menge an basischer Verbindung wird dabei so gewählt, daß der Neutralisationsgrad des Polymers zwischen 0,1 und 99 %, bevorzugt zwischen 0,1 und 75 % und ganz besonders bevorzugt zwischen 0,1 und 40 % liegt.
   Es kommen auch Haftvermittler auf Polyurethanbasis in Frage.
   Sowohl die Haftvermittlerschicht als auch die thermoplastische Kunststoffschicht können noch übliche Additive wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder einem direkt in dem entsprechenden Polymer eingearbeiteten Konzentrat eingesetzt. Nähere Angaben zu den üblicherweise eingesetzten Mengen und Beispiele für geeignete Additive sind beispielsweise Gächter-Müller, Kunststoffadditive, Carl-Hanser Verlag zu entnehmen. Bevorzugt werden diese Additive in die thermoplastische Kunststoffschicht eingearbeitet.
   Die ggf. verwendeten Klebstoffe werden vorzugsweise durch Auftragen aus Lösungen oder Dispersionen in Wasser oder organischen Lösungsmitteln aufgebracht. Die Lösungen oder die Dispersionen haben in der Regel einen Klebstoffgehalt von etwa 5 bis 60 Gew.-%. Die aufgebrachte Klebstoffmenge beträgt in der Regel etwa 1 bis 10 g/m² Fläche. Besonders geeignete Klebstoffe sind die synthetischen Klebstoffe, bestehend aus thermoplastischen Harzen wie Celluloseester, Celluloseether, Alkyl- oder Acrylester, Polyamide, Polyurethane und Polyester, aus wärmehärtenden Harzen wie Epoxyharzen, Harnstoff/Formaldehydharzen, Phenol/Formaldehydharzen und Melamin-Formaldehydharzen oder aus synthetischen Kautschuken.
   Zusätzlich zu den genannten Beschichtungen können erfindungsgemäß auch Pigmentierungen vorgenommen werden. Es wird bevorzugt, unter dem Schichtstoff aus thermoplastischen Polyurethanen eine pigmenthaltige Schicht anzuordnen. Bei Verwendung eines Haftvermittlers wird diese Schicht entweder unmittelbar auf dem Trägermaterial oder unmittelbar unter der Polyurethanschicht angeordnet sein.
   Die in der beschriebenen Weise hergestellten Schichtstoffe eignen sich für die Beschichtung der unterschiedlichsten Materialien, vorzugsweise sind dies Kunststoffe, Holz- und Spanplatten sowie Metalle. Ein bevorzugter Anwendungsbereich liegt in der Herstellung von Sportgeräten, insbesondere von Skier und Surfbrettern. Denn in diesem Bereich ist es ganz besonders erforderlich, hartes, kälteflexibles, schnittfestes und UV-lichtbeständiges Material zum Einsatz zu bringen. Wie bereits oben beschrieben worden ist, wird die UV-Beständigkeit durch den Einsatz der Antioxidanzien und Radikalfänger in dem thermoplastischen Polyurethan erreicht. Dies weist zugleich eine gute Festigkeit und Verschleißkonstanz auf. Auf der anderen Seite haften die thermoplastischen Polyurethane besonders gut auf anderen Thermoplasten und Duroplasten.
   Die Klarlackschicht ist jedoch nicht mehr erforderlich, um die notwendige UV-Beständigkeit herzustellen. Damit ist es - wie ebenfalls oben beschrieben - nunmehr möglich, eine besonders gute Haftung auf der Oberfläche des thermoplastischen Polyurethans zu erreichen. Zugleich können jetzt Decklackschichten verwendet werden, deren alleinige Aufgabe es ist, hart, hochglänzend, kälteflexibel und schnittfest zu sein. Aufgrund dieser nunmehr erzielbaren Eigenschaften eignen sich die erfindungsgemäßen Schichtstoffe daher insbesondere zur Herstellung von Skiern und Surfbrettern.
   Die beschriebenen Eigenschaften bedingen aber auch die Verwendbarkeit für Beschichtungen von Hölzern für den Innen- und Außenbereich. Dies gilt insbesondere für Möbel und Möbelteile, die besonders hochglänzend, kälteflexibel, schnittfest, hart und/oder verschleißfest sein müssen.
   Im folgenden wird die Erfindung unter Bezugnahme auf die Beispiele näher beschrieben:
   A) Beispiele für UV-stabilisiertes Polyurethan:
      1. Polyetherpolyurethan der Shorehärte 74 D:
         1000 Teile Polytetrahydrofuran MG 1000
            (PTHF 1000)
         1650 Teile 4,4-Diphenylmethandiisocyanat 504 Teile Butandiol (1,4)
         0,5% Pentaerythrityl-tetrakis-[3-(3,5-di-tert.butyl-4-hydroxyphenyl)-propionat]
      2. Polyetherpolyyurethan der Shorehärte 60 D:
         1000 Teile Polytetrahydrofuran MG 1000
            (PTHF 1000)
         1200 Teile 4,4-Diphenylmethandiisocyanat )
         342 Teile Butandiol (1,4)
         1 % Pentaerythrityl-tetrakis-[3-(3,5-di-tert.butyl-4-hydroxyphenyl)-propionat]
      3. 1000 Teile Polyoxybutylenglycol mit mittlerem Molekulargewicht 1000 (PTHF 1000)
         600 Teile 4,4 Diphenyldiisocyanat
         126 Teile Butandiol 1,4
         + 1% Antioxidans
         Mechanische Eigenschaften:
         Zugfestigkeit 50 Mpa
         Bruchdehnung 600 %
         Abrieb nach DIN 25 mm³
      4. Polyether-Polyurethan der Shorehärte 45 D
         1000 Teile PTHF 1000
         1100 Teile Methyldiphenyldiisocyanat
         306 Teile Butandiol 1,4
         + 0.5 % Antioxidans
      5. Polyester-Polyurethan der Shorehärte
         1000 Teile Polybutandiol 1,4-hexandiol -1,6-adipatdiol MG 2000
         425 Teile Methyldiphenyldiisocyanat
         106 Teile Butandiol 1,4
         10 Teile Carbodiimid
      6. Polyester-Polyurethan der Shorehärte
         1000 Teile Polybutandiol 1,4-ethylendiol MG 1000
         670 Teile Methyldiphenyldiisocyanat
         149,5 Teile Butandiol 1,4
         10 Teile Carbodiimid als Hydrolyseschutz
      7. Polyester-Polyurethan
         1000 Teile Polybutandiol 1,4-ethylendiol
         440 Teile Methyldiphenyldiisocyanat
         121 Teile Butandiol 1,4
         10 Teile Carbodiimid
      8. Polyester-Polyurethan
         1000 Teile Polybutandiol 1,4-adipat
         300 Teile Methyldiphenyldiisocyanat
         90.9 Teile Butandiol 1,4
         10 Teile Carbodiimid

         Die Herstellung erfolgte in beiden Beispielen nach dem Band- oder Extruderverfahren.
         Die Stabilisierung erfolgt mit
         0,5 % 1,3,5-Triglycidylisocyanurat
         0,5 % 2-(2-Hydroxy-3,5-di-tert.amyl-phenyl)-2H-benztriazol)
   B) Beispiel für die Herstellung eines Klarlacks
      1. Herstellung eines Acrylatharzes
         In einem Reaktionskessel, ausgestattet mit Monomerenzulauf, Initiatorzulauf, Thermometer, Ölheizung und Rückflußkühler, werden 20,35 g Pentylacetat auf 137°C erwärmt. Hierzu werden innerhalb von 4 h und 30 min gleichmäßig 7,44 g t-Butylperethylhexanoat (Initiator) zudosiert. 15 Minuten nach Beginn der Initiatorzudosierung wird eine Monomerenmischung, bestehend aus 6,88 g Ethylhexylacrylat, 14,44 g Ethylhexylmethacrylat, 11,93 g Cyclohexylmethacrylat, 28,58 g 2-Hydroxypropylmethacrylat und 0,16 g Acrylsäure innerhalb eines Zeitraumes von 4 h gleichmäßig zugegeben. Nach Beendigung der Initiatorzugabe wird die Reaktionstemperatur noch 1 h bei 137°C gehalten, bevor auf 100°C abgekühlt wird und weitere 0,61 g t-Butylperethylhexanoat gleichmäßig über einen Zeitraum von 1 h zugegeben werden. Diese Reaktionsmischung wird so lange bei 110°C gehalten, bis der Feststoffgehalt bei ca. 72 % und die Viskosität einer 50%igen Lösung einer Reaktorprobe in Solventnaphtha im Bereich von 1,0 - 2,5 dPas (Platte/Kegel-Viskosimeter) liegen. Dann wird abgekühlt und mit Pentylacetat auf einen Feststoffgehalt von 65 % eingestellt.
      2. 2K-Klarlack
         Zur Herstellung des Klarlackes werden 69,7 g Acrylatharz mit 1,4 g UV-Absorber (Ciba-Geigy), 1,0 g Radikalfänger (Ciba-Geigy), 0,1 g eines handelsüblichen Verlaufsmittels der Firma Bayer und 0,03 g Zinnkatalysator versetzt. Mit nichtprotischen Lösemitteln wie Butylglykolacetat, Butyldiglykolacetat, Butylacetat und Solventnaphtha wird anschließend auf eine Viskosität von 23 sec. im DIN-4-Becher eingestellt.
         Als Härterlösung dient eine 65%ige Lösung in Butylacetat/Solventnaphtha (1:3) einer Mischung eines Polyisocyanates auf Basos Isophorondiisocyanat und eines Polyisocyanates auf Basis Hexamethylendiisocyanat (2:1). Der Klarlack wird mit so viel Härterlösung versetzt, daß ein NCO/OH-Äquivalentverhältnis von 1:1 resultiert.
   C) Probenvorbehandlung
      Die mit dem UV-stabilisierten Polyurethan gemäß den Beispielen A 1-8 beschichteten Platten werden vor dem Auftrag des 2K-Klarlackes mit einem Lösemittelgemisch aus Solventnaphtha, 1-Methoxypropylacetat-2, Methoxypropanol, Butylglykol und Butylglykolacetat abgewischt.

### Applikation und Trocknung

Der 2K-Klarlack wurde mit einer Fließbecherpistole (Düsenöffnung 1,2 mm; Luftdruck 4,5 bar) auf mit Polyurethan gem. Beispiel A beschichtete Platten gespritzt. Die Applikation erfolgte bei einer Lufttemperatur von 23°C. Die so beschichteten PUR-Platten wurden 10 min bei 23°C und anschließend 10 min bei 80°C abgelüftet und dann 30 min bei 130°C in einem Umluftofen eingebrannt, abgekühlt und beurteilt.

Die erhaltene Lackierung zeigt einen sehr guten Verlauf, sehr gute Kälteflixibilität, UV-Beständigkeit, Kratzbeständigkeit und vor allem eine sehr gute Haftung zum Untergrund.

(Durch die Erhöhung der Katalysatorkonzentration des 2K-Klarlackes und/oder durch den Einsatz von Acrylatharzen mit primären OH-Gruppen kann die Reaktivität des 2K-Klarlackes vom Fachmann so erhöht werden, daß raumtemperaturhärtende 2K-Klarlacke erhalten werden. Des weiteren können durch Änderungen der Lösemittelmengen des 2K-Klarlackes (= Viskositätsänderung) auch andere Applikationsverfahren wie Walzen, Rakeln, Tauchen usw. genutzt werden).

Durch Auswahl der Acrylatmonomere und/oder der Polyisocyanate kann der Fachmann sowohl die Flexibilität bzw. Härte als auch die Vernetzungsdichte des Lackfilms einstellen.

## Patentansprüche

1. Schichtstoff, enthaltend
a) eine Schicht aus Klarlack auf Basis von Polyurethan, erhältlich aus hydroxylgruppenhaltigen Acrylpolymerisaten und aliphatischen und/oder cycloaliphatischen Polyisocyanaten,
b) ggf. eine Haftvermittlerschicht,
c) eine Schicht auf Basis von thermoplastischen, gegen ultraviolette Strahlung stabilisierten Polyurethanen auf der Basis von Diisocyanaten, Diolen als Kettenverlängerern, Polytetrahydrofuran oder linearen Polyesterdiolen,
d) ggf. eine Haftvermittlerschicht und
e) einer Trägermaterialschicht.

2. Schichtstoff nach Anspruch 1, wobei die Trägermaterialschicht aus Polyester, Polyurethan, Holz oder Metall besteht.

3. Schichtstoff nach Anspruch 1 oder 2, wobei das Polyurethan der Schicht c) zur Stabilisierung gegen ultraviolette Strahlung Antioxidanzien, vorzugsweise sterisch gehinderte Phenole, enthält.

4. Schichtstoff nach einem der Ansprüche 1 bis 3, wobei das Polyurethan der Schicht c) als Radikalfänger wirkende Verbindungen, vorzugsweise Aunine oder Epoxide, enthalt.

5. Schichtstoff nach einem der Ansprüche 1 bis 4, wobei das Polyurethan der Schicht c) als Filter gegen ultraviolette Strahlung wirkende Verbindungen, vorzugsweise Benztriazol, enthält.

6. Schichtstoff nach einem der Ansprüche 1 bis 5, wobei das Polyurethan eine Shore-A-Härte von 75 A bis 85 D aufweist.

7. Schichtstoff nach einem der Ansprüche 1 bis 6, wobei Schicht c) aus wenigstens zwei Schichten unterschiedlichar Härte zusammengesetzt ist, wobei die weichere Schicht als Haftvermittler dient.

8. Schichtstoff nach einem der Ansprüche 1 bis 7, wobei unter der Schicht c) eine pigmenthaltige Schicht angeordnet ist.

9. Schichtstoff nach einem der Ansprüche 1 bis 8, **dadurch gekennzeichnet, daß** der Klarlack gem. Schicht a) ein Zweikomponenten Polyurethan-Beschichtungsmittel ist, enthaltend:
a) eine oder mehrere Polyisocyanatkomponenten, vorzugsweise zwei unterschiedlichen Polyisocyanaten,
b) eine oder mehrere hydroxylgruppenhaltige Acrylpolymerisate mit einem Hydroxylgruppengehalt von 0,1 bis 10 Gew. %, vorzugsweise 1 bis 6 Gew.-%, und ggf.
c) reaktive Verdünner, vorzugsweise niedermolekularen Polyolkomponenten mit mindestens zwei gegenüber Isocyanat reaktiven Gruppen und Hydroxylgruppengehalten von mehr als 10 Gew.-%.

10. Schichtstoff nach einem der Ansprüche 1 bis 8, **dadurch gekennzeichnet, daß** der Klarlack ein 1-Komponenten-Polyurethanbeschichtungsmittel ist, bei dem es sich um Isocyanat-Präpolymere mit einem NCO-Gehalt von 2 bis 16 Gew.-% handelt und die vorzugsweise durch Umsetzung von Di- und/oder Polyisocyanaten mit unterschüssigen Mengen an hydroxylgruppenhaltigen Acrylatpolymerisaten erhalten werden.

11. Verwendung der Schichtstoffe gem. einem der Ansprüche 1 bis 10, zur Herstellung von Sportgeräten, vorzugsweise Skiern und Surfbrettern sowie von Holz- und Spanplattenbeschichtungen, vorzugsweise für die Herstellung von Möbelteilen und Möbeln.

## Claims

1. A laminate comprising
a) a layer of clearcoat material based on polyurethane, obtainable from hydroxyl-containing acrylic polymers and aliphatic and/or cycloaliphatic polyisocyanates,
b) if desired, an adhesion promoter layer,
c) a layer based on thermoplastic polyurethanes stabilized against ultraviolet radiation and based on diisocyanates, diols as chain extenders, polytetrahydrofuran or linear polyesterdiols,
d) if desired, an adhesion promoter layer, and
e) a support material layer.

2. The laminate of claim 1, wherein the support material layer is of polyester, polyurethane, wood or metal.

3. The laminate of claim 1 or 2, wherein for stabilization against ultraviolet radiation the polyurethane of layer c) comprises antioxidants, preferably sterically hindered phenols.

4. The laminate of one of claims 1 to 3, wherein the polyurethane of layer c) comprises compounds which act as free-radical scavengers, preferably amines or epoxides.

5. The laminate of one of claims 1 to 4, wherein the polyurethane of layer c) comprises compounds which act as filters with respect to ultraviolet radiation, preferably benzotriazole.

6. The laminate of one of claims 1 to 5, wherein the polyurethane has a Shore A hardness of 75 A to 85 D.

7. The laminate of one of claims 1 to 6, wherein layer c) is composed of at least two layers of different hardness, the softer layer serving as adhesion promoter.

8. The laminate of one of claims 1 to 7, wherein a pigment-containing layer is arranged below layer c).

9. The laminate of one of claims 1 to 8, wherein the clearcoat material of layer a) is a two-component polyurethane coating composition comprising:
a) one or more polyisocyanate components, preferably two different polyisocyanates,
b) one or more hydroxyl-containing acrylic polymers having a hydroxyl group content of from 0.1 to 10% by weight, preferably from 1 to 6% by weight, and if desired
c) reactive diluents, preferably low molecular mass polyol components containing at least two isocyanate-reactive groups and having hydroxyl group contents of more than 10% by weight.

10. The laminate of one of claims 1 to 8, wherein the clearcoat material is a 1-component polyurethane coating composition comprising isocyanate prepolymers having a NCO content of 2 to 16% by weight and preferably obtained by reaction of diisocyanates and/or polyisocyanates with excess amounts of hydroxyl-containing acrylate polymers.

11. The use of the laminates as claimed in any of claims 1 to 10 for the production of sports equipment, preferably skis and surfboards, and of coatings on wood and chipboard, preferably for the production of furniture parts and furniture.

## Revendications

1. Stratifié comportant
a) une couche de vernis transparent à base de polyuréthanne pouvant être obtenu à partir de polymères acryliques contenant des groupes hydroxy et de polyisocyanates aliphatiques et/ou cycloaliphatiques,
b) éventuellement une couche d'agent favorisant l'adhérence,
c) une couche à base de polyuréthannes thermoplastiques stabilisés vis-à-vis du rayonnement ultraviolet, à base de diisocyanates, de diols en tant que prolongateurs de chaîne, de polytétrahydrofuranne ou de polyesterdiols linéaires,
d) éventuellement une couche d'agent favorisant l'adhérence et
e) une couche de matériau de support.

2. Stratifié selon la revendication 1, dans lequel la couche de matériau de support est constituée de polyester, polyuréthanne, bois ou métal.

3. Stratifié selon la revendication 1 ou 2, dans lequel le polyuréthanne de la couche c) contient, pour la stabilisation vis-à-vis du rayonnement ultraviolet, des antioxydants, de préférence des phénols à empêchement stérique.

4. Stratifié selon l'une quelconque des revendications 1 à 3, dans lequel le polyuréthanne de la couche c) contient des composés, de préférence des amines ou des époxydes, agissant en tant que capteurs de radicaux.

5. Stratifié selon l'une quelconque des revendications 1 à 4, dans lequel le polyuréthanne de la couche c) contient des composés, de préférence du benzotriazole, agissant en tant que filtres contre le rayonnement ultraviolet.

6. Stratifié selon l'une quelconque des revendications 1 à 5, dans lequel le polyuréthanne présente une dureté Shore A de 75 A à 85 D.

7. Stratifié selon l'une quelconque des revendications 1 à 6, dans lequel la couche c) est composée d'au moins deux couches de duretés différentes, la moins dure servant d'agent facilitant l'adhérence.

8. Stratifié selon l'une quelconque des revendications 1 à 7, dans lequel une couche contenant un pigment est placée au-dessous de la couche c).

9. Stratifié selon l'une quelconque des revendications 1 à 8, **caractérisé en ce qu** le vernis transparent de la couche a) est un produit de revêtement de polyuréthanne à deux composants, contenant :
a) un ou plusieurs composants polyisocyanate, de préférence deux polyisocyanates différents,
b) un ou plusieurs polymères acryliques contenant des groupes hydroxy, ayant une teneur en groupes hydroxy allant de 0,1 à 10 % en poids, de préférence, de 1 à 6 % en poids, et éventuellement
c) des diluants réactifs, de préférence des composants polyol de faible masse moléculaire comportant au moins deux groupes réactifs vis-à-vis d'un isocyanate et ayant des teneurs en groupes hydroxy de plus de 10 % en poids

10. Stratifié selon l'une quelconque des revendications 1 à 8, **caractérisé en ce que** le vernis transparent est un produit de revêtement de polyuréthanne à un composant, qui consiste en prépolymères d'isocyanates ayant une teneur en groupes NCO allant de 2 à 16 % en poids et qui sont obtenus de préférence par la réaction de di- et/ou polyisocyanates avec des quantités en excès de polymères d'acrylates contenant des groupes hydroxy.

11. Utilisation des stratifiés selon l'une quelconque des revendications 1 à 10, pour la fabrication d'articles de sport, de préférence, de skis et de planches de surf, ainsi que de revêtements de panneaux de particules et de bois, de préférence pour la fabrication de meubles et d'éléments de meubles
